(19) Europäisches Patentamt / European Patent Office / Office européen des brevets

(11) **EP 2 979 904 B1**

(12) **EUROPEAN PATENT SPECIFICATION**

(45) Date of publication and mention
of the grant of the patent:
**10.10.2018 Bulletin 2018/41**

(51) Int Cl.:
**B60C 15/02** <sup>(2006.01)</sup>

(21) Application number: **15177184.7**

(22) Date of filing: **17.07.2015**

(54) **PNEUMATIC TIRE**

**LUFTREIFEN**

**PNEUMATIQUE**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.07.2014 KR 20140097477**

(43) Date of publication of application:
**03.02.2016 Bulletin 2016/05**

(73) Proprietor: **Kumho Tire Co., Inc.
Gwangju 506-711 (KR)**

(72) Inventor: **JEONG, Kyoung Moon
Gwangju 506-711 (KR)**

(74) Representative: **Kindermann, Peter
Karl-Böhm-Strasse 1
85598 Baldham (DE)**

(56) References cited:
**EP-A1- 1 867 497       EP-A1- 2 682 286
FR-A1- 2 477 978       JP-A- H06 278 409
JP-A- 2007 055 479     KR-A- 20000 046 263
US-A1- 2010 018 623**

**Description**

Field of the Invention

The present invention relates to a pneumatic tire including a tread portion, a cap ply, a carcass, an apex, a bead, a side portion, and a belt; and more particularly, the pneumatic tire having asymmetrical structure with respect to a central line in a width direction of a pneumatic tire.

Background of the Invention

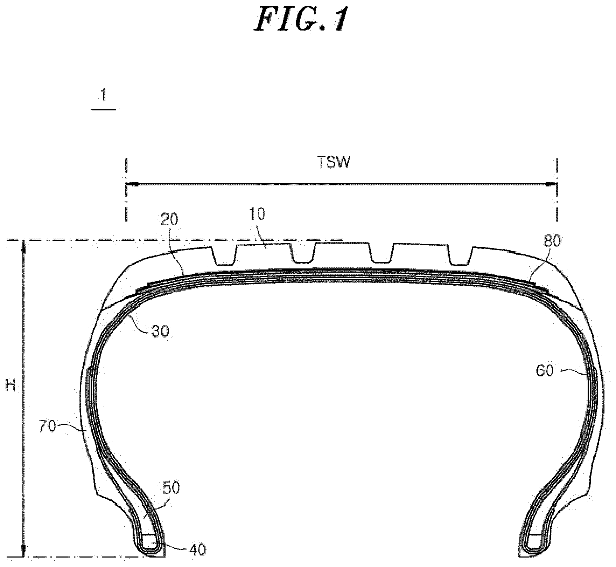

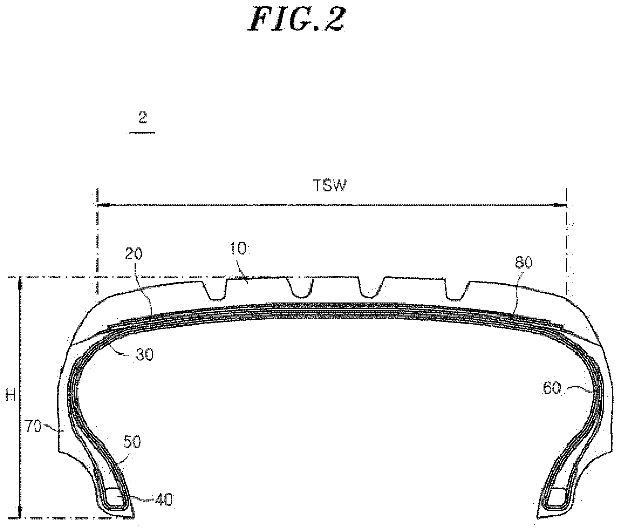

In general, a pneumatic tire includes a tread portion 10 that is directly in contact with a road surface, a cap ply 20 that is provided within the tread portion 10 and serves as a protective layer of other components, a carcass 30 that forms a frame of the tire, a bead 40 coupled to a rim, an apex 50 that covers the bead 40 to alleviate impact applied to the bead 40, an inner liner 60 that is positioned on an inner side of the carcass 30 and prevents leakage of internal air, a side wall 70 that connects the tread portion 10 and the bead 40 and allows the tire to make a bending and stretching movement, and one or more belts 80 that are installed between the tread portion 10 and the carcass 30. Figs. 1 and 2 show a cross-sectional structure of general pneumatic tires 1 and 2.

Meanwhile, an aspect ratio of a pneumatic tire is a value obtained by multiplying 100 to a ratio of cross-sectional tire height (H) to a cross-sectional tire width (TSW). In general, a high aspect ratio tire 1 having an aspect ratio equal to or greater than 55 as illustrated in Fig. 1 has excellent ride comfort, noise performance, and the like, and a low aspect ratio tire 2 having an aspect ratio smaller than 55 as illustrated in Fig. 2 has excellent braking, handling, and leaning performance, fuel efficiency, high speed driving safety, and the like, as compared with the high aspect ratio tire 1.

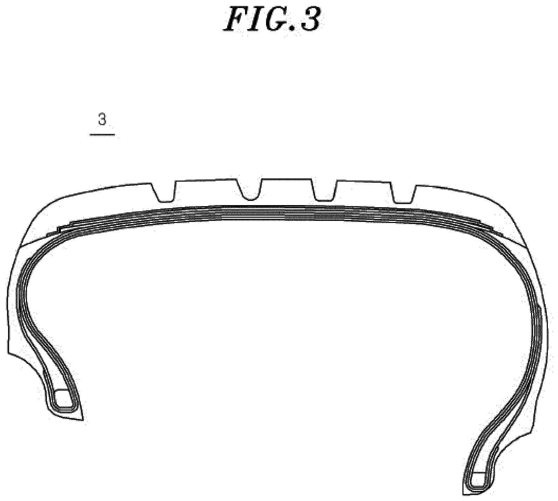

In order to combine the advantages of the two types of the tires described above, conventionally, a tire having an asymmetrical structure in which rim diameters of left and right sides are different with respect to a driving direction has been developed. Fig. 3 shows a cross-section of a conventional tire 3 having an asymmetrical structure.

When the rim diameters of left and right sides are different as described above, ride comfort and handling performance can be enhanced. However, since left and right rigidities of the tire are not symmetrical, a performance of the tire in supporting a vehicle load cannot be optimized

Moreover, handling performance can be slightly enhanced, but various other driving performances of the tire cannot be effectively enhanced.

Document JP 2007 055479 A on which the preamble of claims 1, 8 and 10 is based discloses a pneumatic tire including a tread portion, a cap ply provided within the tread portion and serving as a protective layer, a carcass, an apex, a bead, a side portion, and a belt and having asymmetrical structure with respect to a central line in a width direction, wherein outer diameters of one side and the other side of the pneumatic tire are equal, while rim diameters of the one side and the other side of the pneumatic tire are different, and thicknesses of one side portion and the other side portion are different.

Document EP 2 682 286 A1 discloses a similar conventional pneumatic tire, wherein outer diameters of a left side and a right side are equal, while rim diameters of the left side and the right side are different.

Moreover, documents KR 2000-0046263 A and FR 2477978 A1 disclose further conventional pneumatic tires having asymmetrical structure with respect to a central line in a width direction, wherein rim diameters of the left side and the right side are different.

Document JP H06 278409 A discloses a pneumatic tire wherein a belt reinforcing layer is arranged so that the circumferential rigidity at both axial ends is mutually differing from each other.

Moreover, document EP 1 867 497 A1 discloses a run-flat pneumatic tire with a reinforcing rubber layer arranged at a sidewall portion of the tire, wherein the rubber hardness on one side portion and the other side portion of the tire is different from each other.

Finally, document US 20010/018623 A1 shows a further conventional pneumatic tire with improved run-flat durability, wherein one bead is reinforced by a first bead filler having an elastic modulus higher than that of a second bead filler of the other bead.

It is an object of the present invention to provide a pneumatic tire wherein the performance of the tire in supporting a vehicle load is further optimized.

According to the present invention this object is achieved by the features of new independent claims 1, 8 and 10.

The dependent subclaims 2 to 7, 9 and 11 define further advantageous embodiments of the present invention.

Brief Description of the Drawings

The above and other objects and features of the present invention will become apparent from the following description of embodiments, given in conjunction with the accompanying drawings, in which:

Fig. 1 shows a cross-sectional structure of a conventional high aspect ratio tire;

Fig. 2 shows a cross-sectional structure of a conventional low aspect ratio tire;

Fig. 3 shows a cross-sectional structure of the conventional tire in which the rim diameters of left and right sides are different;

Fig. 4 shows a cross-sectional structure of a pneumatic tire in accordance with an embodiment of the present invention;

Fig. 5 shows a table including data according to comparative simulation results of tire rigidity, rolling resistance, and durability performance of the conventional tires and the pneumatic tire of Fig. 4;

Fig. 6 shows comparative simulation results of strain energy at the end of a belt of the conventional tires and the pneumatic tire of Fig. 4;

Fig. 7 shows comparative simulation results of temperature distributions of the conventional tires and the pneumatic tire of Fig. 4 during driving; and

Fig. 8 shows comparative simulation results of vehicle handling performance of the conventional tires and the pneumatic tire of Fig. 4.

Detailed Description of the Embodiments

Hereinafter, specific embodiments to implement a technical concept of the present invention will be described in detail with reference to the accompanying drawings.

Also, in describing the present invention, if it is determined that a detailed description of related known components or functions unnecessarily obscures the gist of the present invention, the detailed description thereof will be omitted.

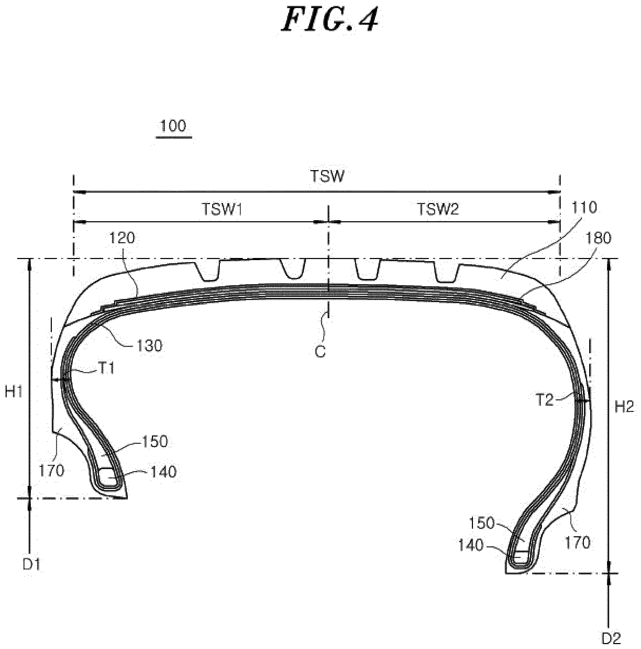

Hereinafter, a pneumatic tire in accordance with an embodiment of the present invention will be described with reference to Figs. 4 to 8.

Fig. 4 is a view illustrating a cross-sectional structure of a pneumatic tire in accordance with an embodiment of the present invention.

Referring to Fig. 4, a pneumatic tire 100 in accordance with an embodiment of the present invention includes a tread portion 110, a cap ply 120, a carcass 130, a bead 140, an apex 150, a side portion 170, and a belt 180. In the pneumatic tire 100, outer diameters of the right and left portions thereof with respect to a central line C in a width direction are equal, rim diameters of left and right sides are

different, and thicknesses of the left and right side portions 170 are different. Here, the width direction refers to a direction in which a rotational axis of the tire 100 extends.

Since the rim diameters of left and right sides of the tire 100 are different, heights of both sides of a cross-section of the tire 100 are formed to be different. Further, in the pneumatic tire 100 in accordance with the present invention, the height of the left side and the right side are different, and at the same time, the thickness of the left and right side portions 170 are different. Here, the side portions 170 are portions that connect the tread portion 110 to the rims in the left and right portions of the tire 100, which may include the carcass 130, an inner liner (not shown), and a side wall as a rubber composition that covers the carcass 130 and the inner liner. Further, the thickness of the side portion 170 refers to the smallest thickness of each of the left and right side portions 170.

Specifically, when it is assumed that the rim diameters of left and right sides the tire 100 are D1 and D2, respectively, the thicknesses of the left and right side portions 170 are T1 and T2, respectively, and the left and right aspect ratios are S1 and S2, respectively, the pneumatic tire 100 in accordance with this embodiment may satisfy Eq. (1) below. Here, the left and right aspect ratios S1 and S2 may be obtained as S1=(H1/TSW)x100 and S2=(H2/TSW)x100, respectively. H1 and H2 are heights of left and right portions of cross-sections of the tire 100, respectively, and TSW(Tread Section Width) is a width of a cross-section of the tire 100.

$$(D1/D2) \times (S1/S2) \neq 1$$

$$T1 \neq T2 \qquad\qquad Eq. \ (1)$$

Further, in the pneumatic tire 100 in accordance with this embodiment, a condition in which the thicknesses of the left side and the right side are different, while a value obtained by multiplying a ratio of the rim diameters of left and right sides and a ratio of the aspect ratios of the left side and the right side is not 1, may be simultaneously satisfied.

Also, in a portion where an aspect ratio is smaller in the left side than in the right side, a thickness of the side portion 170 may be greater. That is, when the value S1 is smaller than the value S2, T1 may be greater than T2, and when the value S1 is greater than S2, T1 may be smaller than T2.

Meanwhile, in the pneumatic tire 100 in accordance with another embodiment of the present invention, while the outer diameters of the left side and the right side thereof are equal, the rim diameters of left and right sides are different, the thicknesses of the left and right side portions 170 are different, and at the same time, the shapes of left and right patterns of the surface of the tread portion 110 may be different. Here, the shape of the patterns may include a shape of extended patterns, a depth of a recess that forms the patterns, the number of patterns, an interval between the patterns, and the like.

For example, referring to Fig. 4, a pattern shape for all seasons may be applied to the portion TSW2 having a high aspect ratio, and a pattern shape for summer may be applied to the portion TSW1 having a low aspect ratio. Here, the pattern shape for summer may be designed such that the rigidity of a pattern block is greater than the pattern shape for all seasons. However, this is merely an example and the technical concept of the present invention is not limited thereto.

Meanwhile, in the pneumatic tire 100 in accordance with another embodiment of the present invention, extended lengths of the left and right carcasses 130 may be different. For example, an extended length of any one of the left and right carcasses 130 may be greater than that of the other. In this case, the rigidity of the tire 100 of the greater extended length of the carcass 130 may increase, forming an asymmetrical structure.

Meanwhile, in the pneumatic tire 100 in accordance with the present invention, the cap ply 120 is applied to only a left end or a right end of the belt 180. In this case, the rigidity of the tire 100 in the side where the cap ply 120 is applied may increase, forming an asymmetrical structure.

Meanwhile, according to a first aspect of the present invention, cord structures of the left and right beads 140 are configured to be different. The cord structures of the beads 140 may include a material of the beads 140, a shape of the beads 140, rigidity of the beads 140, and the like. In this case, the rigidities of both sides of the tire 100 may be different, forming an asymmetrical structure.

Meanwhile, in the pneumatic tire 100 according to a second aspect of the present invention, modulus of the left and right side portions 170 are different. The modulus of rubber compositions that form the side portions 170 are different. Specifically, a modulus of rubber composition that forms any one of the left and right side portions 170 is 1.3 times or greater than that of the rubber composition that forms the other side and the modulus of the left and right apexes 150 that are provided within the side portions 170 are different. In this case, a modulus of one apex 150 is 1.2 times or greater than that of the other apex 150.

Meanwhile, in the pneumatic tire 100 according to a third aspect of the present invention, materials of the left and right apexes 150 are different. One apex 150 that includes a fiber cord is provided on any one of the left and right sides, and an apex 150 that does not include a fiber cord is provided on the other side.

The various embodiments described above may be applied to one pneumatic tire 100, or two or more embodiments may be combined to be applied to one pneumatic tire 100. When two or more embodiments are combined, the embodiments may be combined such that left and right sides are asymmetrical with respect to a central line of the tire 100 in a circumferential direction.

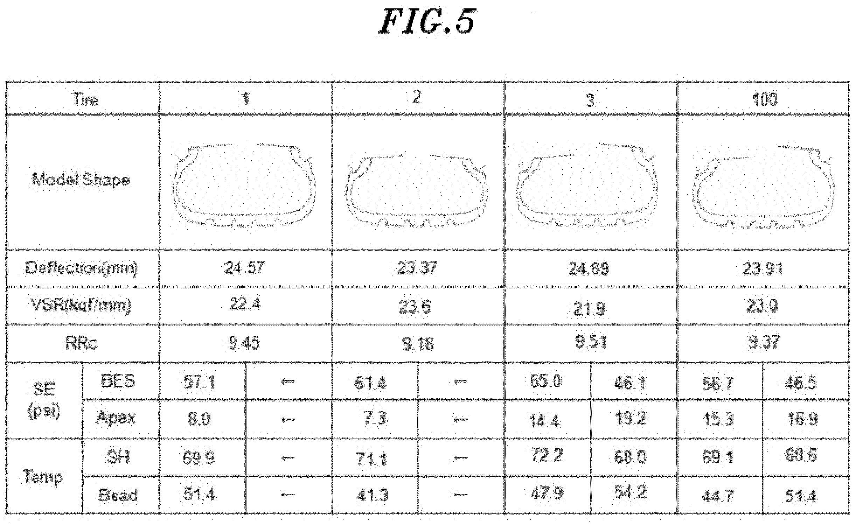

Fig. 5 is a table illustrating data according to comparative simulation results of tire rigidity, rolling resistance, and durability performance of the conventional tires 1 to 3 and the present tire of Fig. 4.

In the table of Fig. 5, simulation results of the conventional tire 1 (Fig. 1) having a high aspect ratio, the conventional tire 2 (Fig. 2) having a low aspect ratio, and the present tire 3 (Fig. 3) in which the rim diameters of left and right sides were different, and the pneumatic tire 100 of the present embodiment are illustrated from the left columns. In the pneumatic tire 100 of the present embodiment, the rim diameters of left and right sides and the aspect ratios satisfied (D1/D2)x(S1/S2)=1.027, and a thickness of the side portion in the side where the diameter of the rim was greater is 1.1 times that of the other side portion. Further, a turn-up height of the carcass in the side where the diameter of the rim was greater was higher and Flipper with a fiber cord was applied to the apex.

Fig. 5 shows the finite element analysis (FEA) results of a vertical spring rate (VSR), a rolling resistance coefficient (RRc), and durability performance of the tires by applying an air pressure of 30 psi and a load of 500 kgf. Referring to Fig. 5, when the asymmetrical tire 100 of the present embodiment was applied, the vertical spring rate (VSR) of the tire 100 was enhanced compared with the present tire 3 in which only the rim diameters of left and right sides are different or the conventional tire 2 having a low aspect ratio. Further, the asymmetrical tire 100 of the present embodiment has the rolling resistance coefficient (RRc) smaller than those of the conventional tire 3 in which only the rim diameters of left and right sides are different or the conventional tire 1 having a high aspect ratio. Fuel efficiency may be enhanced as RRc is reduced.

When the asymmetrical tire 100 of the present embodiment is applied, the rigidity of the tire greater than that of the conventional tire 2 having a low aspect ratio can be secured and fuel efficiency can be enhanced compared with the case of using the tire 1 having a high aspect ratio. Further, an effect greater than the case of applying the conventional tire 3 in which only the rim diameters of left and right sides are different can be obtained.

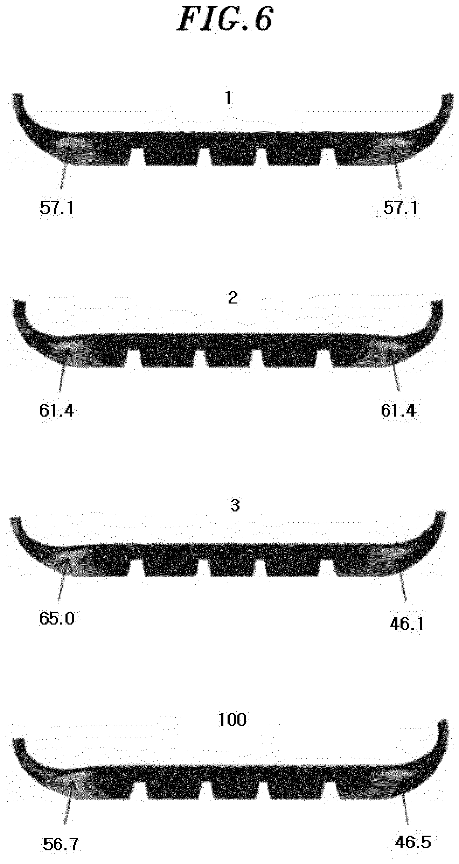

Fig. 6 is a view illustrating comparative simulation results of strain energy in the ends of belts of the conventional tires (Figs. 1 to 3) and the present tire of Fig. 4.

In Fig. 6, simulation results of the conventional tire 1 having a high aspect ratio, the conventional tire 2 having a low aspect ratio, and the conventional tire 3 in which the rim diameters of left and right sides were different, and the pneumatic tire 100 of the present embodiment are illustrated from above.

In Fig. 6, strain energy in the ends of the belts when the same load was applied in the standard air pressure was interpreted to be indicated as colors and numerical values. In general, when a load is applied, the ends of the belts formed of steel are most vulnerable, and as a strain energy value increases, durability performance is reduced. Referring to Fig. 6, the asymmetrical tire 100 of the present embodiment has a strain energy value substantially lower than those of the conventional tire 1 having a high aspect ratio, the conventional tire 2 having a low aspect ratio, and the conventional tire 3 in which rim diameters of left and right sides are different.

Thus, it can be seen that the asymmetrical tire 100 of the present embodiment exhibits enhanced durability performance, compared with the conventional tires 1, 2 and 3.

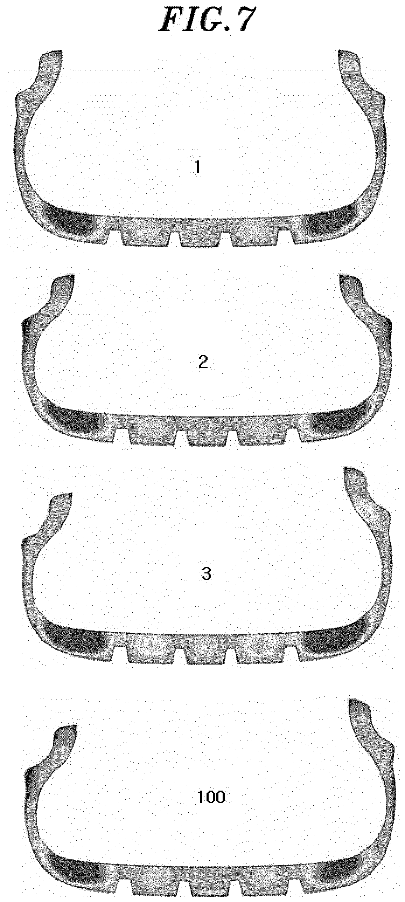

Fig. 7 is a view illustrating comparative simulation results of temperature distributions of the conventional tires (Figs. 1 to 3) and the pneumatic tire of Fig. 4 during driving.

In Fig. 7, simulation results of the conventional tire 1 having a high aspect ratio, the conventional tire 2 having a low aspect ratio, and the conventional tire 3 in which the rim diameters of left and right sides were different, and the pneumatic tire 100 of the present embodiment are illustrated from above. The pneumatic tire 100 of the present embodiment has the same asymmetrical structure as that of the simulation of Fig. 5 described above.

In Fig. 7, temperature distributions generated within the tires when the same load was applied in the standard air pressure and the tires rotated at a speed of 80 km/h were interpreted to be shown. As for temperature, the ends of the belts were most vulnerable, and referring to Fig. 7, the asymmetrical tire 100 of the present embodiment has a lower temperature distribution, compared with the conventional tire 1 having a high aspect ratio, the conventional tire 2 having a low aspect ratio, and the present tire 3 in which the rim diameters of left and right sides were different.

That is, it can be seen that the asymmetrical tire 100 of the present embodiment also has an effect of enhanced heating performance during driving, compared with the conventional tires 1, 2, and the present tire 3.

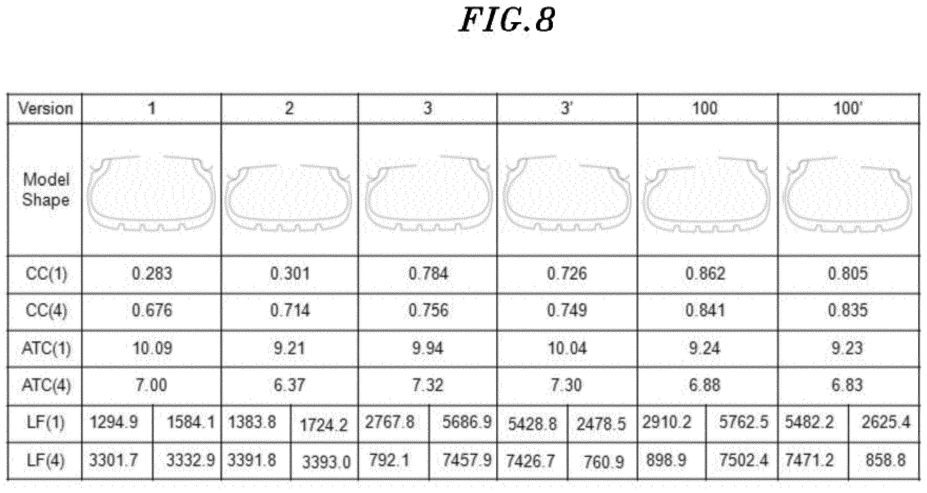

Fig. 8 is a view illustrating comparative simulation results of vehicle handling performance of the conventional tires (Figs. 1 to 3) and the pneumatic tire of Fig. 4.

In the table of Fig. 8, simulation results of the conventional tire 1 having a high aspect ratio, the conventional tire 2 having a low aspect ratio, and the present tires 3 and 3' in which the rim diameters of left and right sides were different and the left and right were interchanged, the pneumatic tire 100 of the present embodiment, and tires 100 and 100' in which the left and right were changed are illustrated from the left columns. In the pneumatic tire 100 of the present embodiment, the rim diameters of left and right sides and the aspect ratios satisfied (D1/D2)x(S1/S2)=0.974 and the other conditions are the same as those of the asymmetrical structure applied in the simulation of Fig. 5 described above.

In Fig. 8, the results of analysis of force & moment by applying the same load in the standard air pressure are illustrated. Here, cornering coefficient (CC) and aligning torque coefficient (ATC) denote handling performance and handling stability. The handling stability may be tested by releasing the tire at a predetermined angle (slip angle) with respect to a driving direction, and the numbers within the parentheses denote slip angles. Further, lateral force (LF) may be generated when a tire is moved out of a driving direction, denoting a force by which the tire may endure without being collapsed when moving out of the driving direction. In general, it is meant that handling stability is excellent as the CC value is greater, as the ATC value is smaller, and as the LF value is greater.

Referring to Fig. 8, when the asymmetrical tires 100 and 100' of the present embodiment are applied, the CC value and the LF values thereof were greater than those of the conventional tire 1 having a high aspect ratio and the conventional tire 2 having a low aspect ratio. Thus, it can be seen that handling performance or handling stability of the asymmetrical tires 100 and 100' were enhanced higher than those of the conventional symmetrical tires, regardless of size of the aspect ratios.

Further, the CC value and the LF value of the asymmetrical tires 100 and 100' of the present embodiment were greater than those of the tires 3 and 3' in which only the rim diameters of left and right sides were different. In consideration of the simulation results of Figs. 5 to 7, the asymmetrical tires 100 of the present embodiment has higher handling stability and superior durability performance, fuel efficiency, and heating performance, than or to those the present asymmetrical tires 3 and 3' in which only the rim diameters of left and right sides are different.

In accordance with the embodiments of the present invention, it is possible to improve durability performance, fuel efficiency and heating performance, as well as driving performance of a vehicle.

While the invention has been shown and described with respect to the embodiments, the present invention is not limited thereto. It will be understood by those skilled in the art that various changes and modifications may be made without departing from the scope of the invention as defined in the following claims.

**Claims**

1. A pneumatic tire including a tread portion (110), a cap ply (120) provided within the tread portion and serving as a protective layer, a carcass (130), an apex (150), a bead (140), a side portion (170), and a belt (180) and having asymmetrical structure with respect to a central line (C) in a width direction,

wherein outer diameters of one side and the other side of the pneumatic tire are equal, while rim diameters of the one side and the other side of the pneumatic tire are different, and thicknesses of one side portion and the other side portion are different,

**characterized in that**

the cap ply (120) is applied to only an end of one side or an end of the other side of the belt (180), and

cords of one side of the bead (140) and the other side of the bead (140) are formed in different structure with each other.

2. The pneumatic tire of claim 1, **characterized in that**, when the rim diameters of the one and the other side of the pneumatic tire are D1 and D2, the one side and the other side aspect ratios are S1 and S2, and the thicknesses of the one and the other side portions are T1 and T2, the pneumatic tire (100) satisfies equations:

$$(D1/D2) \times (S1/S2) \neq 1,$$

$$T1 \neq T2.$$

3. The pneumatic tire of claim 1 or 2, **characterized in that** shapes of the one side and the other side patterns of the surface of the tread portion (110) are different.

4. The pneumatic tire of claim 3, **characterized in that** a pattern for all seasons is formed on any one of the one side and the other side of the pneumatic tire, and a pattern for summer is formed on the respective other side of the pneumatic tire.

5. The pneumatic tire of claim 1 or claim 2, **characterized in that** extended lengths of the one side carcass and the other side carcass are different, so that any one of the one side portion and the other side portion is more reinforced than the respective other side portion.

6. The pneumatic tire of claim 1 or claim 2, **characterized in that** modulus of the one side portion and the other side portion are different.

7. The pneumatic tire of claim 6, **characterized in that** a modulus of rubber composition that forms any one of the one side portion and the other side portion is 1.3 times or greater than that of the rubber composition that forms the respective other side.

8. A pneumatic tire including a tread portion (110), a cap ply (120) provided within the tread portion and serving as a protective layer, a carcass (130), an apex (150), a bead (140), a side portion (170), and a belt (180) and having asymmetrical structure with respect to a central line (C) in a width direction,

wherein outer diameters of one side and the other side of the pneumatic tire are equal, while rim diameters of the one side and the other side of the pneumatic tire are different, and thicknesses of one side portion and the other side portion are different,

**characterized in that**

the cap ply (120) is applied to only an end of one side or an end of the other side of the belt (180),

modulus of the one side portion and the other side portion are different,

a modulus of rubber composition that forms any one of the one side portion and the other side portion is 1.3 times or greater than that of the rubber composition that forms the respective other side,

modulus of one side apex and the other side apex are different, and

a modulus of any one of the one side apex and the other side apex is 1.2 times or greater than that of the respective other apex.

9. The pneumatic tire of claim 1 or claim 2, **characterized in that** materials of the one side apex and the other side apex are different.

10. A pneumatic tire including a tread portion (110), a cap ply (120) provided within the tread portion and serving as a protective layer, a carcass (130), an apex (150), a bead (140), a side portion (170), and a belt (180) and having asymmetrical structure with respect to a central line (C) in a width direction,

wherein outer diameters of one side and the other side of the pneumatic tire are equal, while rim diameters of the one side and the other side of the pneumatic tire are different, and thicknesses of one side portion and the other side portion are different,
**characterized in that**
the cap ply (120) is applied to only an end of one side or an end of the other side of the belt (180),
materials of the one side apex and the other side apex are different, and
an apex that includes a fiber cord on any one of the one side and the other side is used.

**11.** The pneumatic tire of claim 8 or claim 10, **characterized in that**, when the rim diameters of the one and the other side of the pneumatic tire are D1 and D2, the one side and the other side aspect ratios are S1 and S2, and the thicknesses of the one and the other side portions are T1 and T2, the pneumatic tire (100) satisfies equations:

$$(D1/D2) \times (S1/S2) \neq 1,$$

$$T1 \neq T2.$$

**Patentansprüche**

**1.** Luftreifen, enthaltend einen Laufflächenabschnitt (110), eine Laufstreifenlage (120), die innerhalb des Laufflächenabschnitts vorgesehen ist und als eine Schutzschicht dient, eine Karkasse (130), einen Zwischenbau (150), eine Wulst (140), einen Seitenabschnitt (170) und einen Gürtel (180), und mit einer asymmetrischen Struktur bezüglich einer Mittellinie (C) in einer Breitenrichtung,
wobei Außendurchmesser einer Seite und der anderen Seite des Luftreifens gleich sind, während Felgendurchmesser der einen Seite und der anderen Seite des Luftreifens unterschiedlich sind, und Stärken von einem Seitenabschnitt und dem anderen Seitenabschnitt unterschiedlich sind,
**dadurch gekennzeichnet, dass**
die Laufstreifenlage (120) nur an einem Ende von einer Seite oder einem Ende der anderen Seite des Gürtels (180) aufgebracht ist, und
Korde von einer Seite der Wulst (140) und der anderen Seite der Wulst (140) in unterschiedlicher Struktur miteinander ausgebildet sind.

**2.** Luftreifen nach Anspruch 1, **dadurch gekennzeichnet, dass**, wenn die Felgendurchmesser der einen und der anderen Seite des Luftreifens D1 und D2 sind, das eine und das andere Seitenverhältnis S1 und S2 sind und die Stärken des einen und des anderen Seitenabschnitts T1 und T2 sind, der Luftreifen (100) folgende Gleichungen erfüllt:

$$(D1/D2) \times (S1/S2) \neq 1,$$

$$T1 \neq T2.$$

**3.** Luftreifen nach einem der Ansprüche 1 oder 2, **dadurch gekennzeichnet, dass** Formen des einen Seiten- und des anderen Seitenprofils der Oberfläche des Laufflächenabschnitts (110) unterschiedlich sind.

**4.** Luftreifen nach Anspruch 3, **dadurch gekennzeichnet, dass** ein Profil für alle Jahreszeiten auf einer der einen Seite und der anderen Seite des Luftreifens ausgebildet ist, und ein Profil für den Sommer auf der jeweiligen anderen Seite des Luftreifens ausgebildet ist.

**5.** Luftreifen nach einem der Ansprüche 1 oder 2, **dadurch gekennzeichnet, dass** erweiterte Längen der einen Seitenkarkasse und der anderen Seitenkarkasse unterschiedlich sind, sodass einer des einen Seitenabschnitts und des anderen Seitenabschnitts mehr verstärkt ist als der jeweilige andere Seitenabschnitt.

**6.** Luftreifen nach einem der Ansprüche 1 oder 2, **dadurch gekennzeichnet, dass** die Module des einen Seitenabschnitts und des anderen Seitenabschnitts unterschiedlich sind.

**7.** Luftreifen nach Anspruch 6, **dadurch gekennzeichnet, dass** ein Modul einer Kautschukzusammensetzung, die einen des einen Seitenabschnitts und des anderen Seitenabschnitts ausbildet, das 1,3-Fache oder mehr als jenes der Kautschukzusammensetzung beträgt, die die entsprechende andere Seite ausbildet.

**8.** Luftreifen, enthaltend einen Laufflächenabschnitt (110), eine Laufstreifenlage (120), die innerhalb des Laufflächenabschnitts vorgesehen ist und als eine Schutzschicht dient, eine Karkasse (130), einen Zwischenbau (150), eine Wulst (140), einen Seitenabschnitt (170) und einen Gürtel (180), und mit einer asymmetrischen Struktur bezüglich einer Mittellinie (C) in einer Breitenrichtung,
wobei Außendurchmesser einer Seite und der anderen Seite des Luftreifens gleich sind, während Felgendurchmesser der einen Seite und der anderen Seite des Luftreifens unterschiedlich sind, und Stärken von einem Seitenabschnitt und dem anderen Seitenabschnitt unterschiedlich sind,
**dadurch gekennzeichnet, dass**
die Laufstreifenlage (120) nur an einem Ende von einer Seite oder einem Ende der anderen Seite des Gürtels (180) aufgebracht ist,
Module des einen Seitenabschnitts und des anderen Seitenabschnitts unterschiedlich sind,
ein Modul einer Kautschukzusammensetzung, die einen des einen Seitenabschnitts und des anderen Seitenabschnitts ausbildet, das 1,3-Fache oder mehr als jenes der Kautschukzusammensetzung beträgt, die die entsprechende andere Seite ausbildet,
Module von einem Seitenzwischenbau und dem anderen Seitenzwischenbau unterschiedlich sind, und
ein Modul von einem des einen Seitenzwischenbaus und des anderen Seitenzwischenbaus das 1,2-Fache oder mehr als jenes des jeweiligen anderen Zwischenbaus beträgt.

**9.** Luftreifen nach einem der Ansprüche 1 oder 2, **dadurch gekennzeichnet, dass** Materialien des einen Seitenzwischenbaus und des anderen Seitenzwischenbaus unterschiedlich sind.

**10.** Luftreifen, enthaltend einen Laufflächenabschnitt (110), eine Laufstreifenlage (120), die innerhalb des Laufflächenabschnitts vorgesehen ist und als eine Schutzschicht dient, eine Karkasse (130), einen Zwischenbau (150), eine Wulst (140), einen Seitenabschnitt (170) und einen Gürtel (180), und mit einer asymmetrischen Struktur bezüglich einer Mittellinie (C) in einer Breitenrichtung,
wobei Außendurchmesser einer Seite und der anderen Seite des Luftreifens gleich sind, während Felgendurchmesser der einen Seite und der anderen Seite des Luftreifens unterschiedlich sind, und Stärken von einem Seitenabschnitt und dem anderen Seitenabschnitt unterschiedlich sind,
**dadurch gekennzeichnet, dass**
die Laufstreifenlage (120) nur an einem Ende von einer Seite oder einem Ende der anderen Seite des Gürtels (180) aufgebracht ist,
Materialien des einen Seitenzwischenbaus und des anderen Seitenzwischenbaus unterschiedlich sind, und ein Zwischenbau, der einen Faserkord enthält, auf einer der einen Seite und der anderen Seite benutzt wird.

**11.** Luftreifen nach einem der Ansprüche 8 oder 10, **dadurch gekennzeichnet, dass**, wenn die Felgendurchmesser der einen und der anderen Seite des Luftreifens D1 und D2 sind, das eine und das andere Seitenverhältnis S1 und S2 sind und die Stärken des einen und des anderen Seitenabschnitts T1 und T2 sind, der Luftreifen (100) folgende Gleichungen erfüllt:

$$(D1/D2) \times (S1/S2) \neq 1,$$

$$T1 \neq T2.$$

**Revendications**

**1.** Pneumatique comprenant une partie de bande de roulement (110), une nappe de sommet (120) prévue dans la partie de bande de roulement et servant de couche protectrice, une carcasse (130), un sommet (150), un talon (140), une partie latérale (170) et une ceinture (180) et ayant une structure asymétrique par rapport à une ligne centrale (C) dans une direction de largeur,
dans lequel les diamètres extérieurs d'un côté et de l'autre côté du pneumatique sont égaux, tandis que les diamètres de jante d'un côté et de l'autre côté du pneumatique sont différents, et les épaisseurs d'une partie latérale et de l'autre partie latérale sont différentes,
**caractérisé en ce que**
la nappe de sommet (120) n'est appliquée qu'à une extrémité d'un côté ou à une extrémité de l'autre côté de la ceinture (180), et

les cordons d'un côté du talon (140) et de l'autre côté du talon (140) sont formés dans une structure différente l'un de l'autre.

2. Pneumatique selon la revendication 1, **caractérisé en ce que**, lorsque les diamètres de jante de l'un et de l'autre côté du pneumatique sont D1 et D2, que les rapports d'aspect d'un côté et de l'autre côté sont S1 et S2, et que les épaisseurs de l'une et de l'autre partie latérale sont T1 et T2, le pneumatique (100) satisfait aux équations:

$$(D1/D2) \times (S1/S2) \neq 1,$$

$$T1 \neq T2.$$

3. Pneumatique selon la revendication 1 ou 2, **caractérisé en ce que** les formes d'un côté et de l'autre côté de la surface de la partie de la bande de roulement (110) sont différentes.

4. Pneumatique selon la revendication 3, **caractérisé en ce qu'**un motif pour toutes les saisons est formé sur l'un quelconque des deux côtés du pneumatique, et un motif pour l'été est formé sur l'autre côté respectif du pneumatique.

5. Pneumatique selon la revendication 1 ou la revendication 2, **caractérisé en ce que** les longueurs étendues de la carcasse d'un côté et de la carcasse de l'autre côté sont différentes, de sorte que l'une quelconque des parties latérales est plus renforcée que l'autre partie latérale respective.

6. Pneumatique selon la revendication 1 ou la revendication 2, **caractérisé en ce que** le module d'une partie latérale et de l'autre partie latérale sont différents.

7. Pneumatique selon la revendication 6, **caractérisé en ce qu'**un module de composition de caoutchouc qui forme l'une quelconque des parties latérales est 1,3 fois ou plus grand que celui de la composition de caoutchouc qui forme l'autre partie latérale respective.

8. Pneumatique comprenant une partie de bande de roulement (110), une nappe de sommet (120) prévue dans la partie de bande de roulement et servant de couche protectrice, une carcasse (130), un sommet (150), un talon (140), une partie latérale (170) et une ceinture (180) et ayant une structure asymétrique par rapport à une ligne centrale (C) dans une direction de largeur,
dans lequel les diamètres extérieurs d'un côté et de l'autre côté du pneumatique sont égaux, tandis que les diamètres de jante d'un côté et de l'autre côté du pneumatique sont différents, et les épaisseurs d'une partie latérale et de l'autre partie latérale sont différentes,
**caractérisé en ce que**
la nappe de sommet (120) n'est appliquée qu'à une extrémité d'un côté ou à une extrémité de l'autre côté de la ceinture (180),
le module d'une partie latérale et de l'autre partie latérale sont différents,
un module de composition de caoutchouc qui forme l'une quelconque des parties latérales est 1,3 fois ou plus grand que celui de la composition de caoutchouc qui forme l'autre partie latérale respective,
le module d'un sommet d'un côté et du sommet de l'autre côté sont différents, et
un module de l'un quelconque du sommet d'un côté et du sommet de l'autre côté est 1,2 fois ou plus grand que celui de l'autre sommet respectif.

9. Pneumatique selon la revendication 1 ou la revendication 2, **caractérisé en ce que** les matériaux du sommet d'un côté et du sommet de l'autre côté sont différents.

10. Pneumatique comprenant une partie de bande de roulement (110), une nappe de sommet (120) prévue dans la partie de bande de roulement et servant de couche protectrice, une carcasse (130), un sommet (150), un talon (140), une partie latérale (170) et une ceinture (180) et ayant une structure asymétrique par rapport à une ligne centrale (C) dans une direction de largeur,

dans lequel les diamètres extérieurs d'un côté et de l'autre côté du pneumatique sont égaux, tandis que les diamètres de jante d'un côté et de l'autre côté du pneumatique sont différents, et les épaisseurs d'une partie latérale et de l'autre partie latérale sont différentes,

**caractérisé en ce que**

la nappe de sommet (120) n'est appliquée qu'à une extrémité d'un côté ou à une extrémité de l'autre côté de la ceinture (180),

les matériaux du sommet d'un côté et du sommet de l'autre côté de sont différents, et

un sommet qui inclut un talon de fibre sur l'un des deux côtés est utilisé.

11. Pneumatique selon la revendication 8 ou la revendication 10, **caractérisé en ce que**, lorsque les diamètres de jante de l'un et de l'autre côté du pneumatique sont D1 et D2, que les rapports d'aspect d'un côté et de l'autre côté sont S1 et S2, et que les épaisseurs de l'une et de l'autre partie latérale sont T1 et T2, le pneumatique (100) satisfait aux équations:

$$(D1/D2) \times (S1/S2) \neq 1,$$

$$T1 \neq T2.$$

# FIG.1

# FIG.2

FIG.3

3

# FIG.4

## FIG.5

| Tire | | 1 | | 2 | | 3 | | 100 | |
|---|---|---|---|---|---|---|---|---|---|
| Model Shape | | | | | | | | | |
| Deflection(mm) | | 24.57 | | 23.37 | | 24.89 | | 23.91 | |
| VSR(kgf/mm) | | 22.4 | | 23.6 | | 21.9 | | 23.0 | |
| RRc | | 9.45 | | 9.18 | | 9.51 | | 9.37 | |
| SE (psi) | BES | 57.1 | ← | 61.4 | ← | 65.0 | 46.1 | 56.7 | 46.5 |
| | Apex | 8.0 | ← | 7.3 | ← | 14.4 | 19.2 | 15.3 | 16.9 |
| Temp | SH | 69.9 | ← | 71.1 | ← | 72.2 | 68.0 | 69.1 | 68.6 |
| | Bead | 51.4 | ← | 41.3 | ← | 47.9 | 54.2 | 44.7 | 51.4 |

EP 2 979 904 B1

# FIG.6

1

57.1                    57.1

2

61.4                    61.4

3

65.0                    46.1

100

56.7                    46.5

# *FIG.7*

# FIG.8

| Version | 1 | | 2 | | 3 | | 3' | | 100 | | 100' | |
|---|---|---|---|---|---|---|---|---|---|---|---|---|
| Model Shape | | | | | | | | | | | | |
| CC(1) | 0.283 | | 0.301 | | 0.784 | | 0.726 | | 0.862 | | 0.805 | |
| CC(4) | 0.676 | | 0.714 | | 0.756 | | 0.749 | | 0.841 | | 0.835 | |
| ATC(1) | 10.09 | | 9.21 | | 9.94 | | 10.04 | | 9.24 | | 9.23 | |
| ATC(4) | 7.00 | | 6.37 | | 7.32 | | 7.30 | | 6.88 | | 6.83 | |
| LF(1) | 1294.9 | 1584.1 | 1383.8 | 1724.2 | 2767.8 | 5686.9 | 5428.8 | 2478.5 | 2910.2 | 5762.5 | 5482.2 | 2625.4 |
| LF(4) | 3301.7 | 3332.9 | 3391.8 | 3393.0 | 792.1 | 7457.9 | 7426.7 | 760.9 | 898.9 | 7502.4 | 7471.2 | 858.8 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007055479 A
- EP 2682286 A1
- KR 20000046263 A
- FR 2477978 A1
- JP H06278409 A
- EP 1867497 A1
- US 20010018623 A1